**Europäisches Patentamt**

**European Patent Office**

**Office européen des brevets**

(11) Veröffentlichungsnummer: **0 179 951**
**A1**

# (12) EUROPÄISCHE PATENTANMELDUNG

(21) Anmeldenummer: 84115739.9

(22) Anmeldetag: 18.12.84

(51) Int. Cl.⁴: **B 60 K 20/14, B 60 K 41/22**

(30) Priorität: 24.10.84 HU 395984

(43) Veröffentlichungstag der Anmeldung: 07.05.86
Patentblatt 86/19

(84) Benannte Vertragsstaaten: **AT DE FR GB IT NL SE**

(71) Anmelder: **Csepel Autogyár, Pf. 38,
H-2311 Szigetszentmiklos (HU)**

(72) Erfinder: **Töröcsik, Laszlo, Dipl.-Ing., Kakukk u. 10/b,
H-1126 Budapest (HU)**
Erfinder: **Szabo, Pal, Dipl.-Ing, Gyarl u. VII/D,
H-2310 Szigetszentmiklos (HU)**
Erfinder: **Csillag, Jozsef, Dipl.-Ing., Csengeri u. 6,
H-1074 Budapest (HU)**
Erfinder: **Mark, Ferenc, Dipl.-Ing., Bihari u. 16,
H-1033 Budapest (HU)**

(74) Vertreter: **Eitle, Werner, Dipl.-Ing. et al, Hoffmann, Eitle
& Partner Patentanwälte Arabellastrasse 4,
D-8000 München 81 (DE)**

(54) **Hydraulisches Fernschaltsystem für mechanische Wechselgetriebe von Kraftfahrzeugen.**

(57) Die Erfindung betrifft ein hydraulisches Fernschaltsystem für mechanische Wechselgetriebe von Kraftfahrzeugen, das hydraulische Zufuhrzylinder (8, 9, 10, 11) und hydraulische Arbeitszylinder (2, 3, 4, 5) aufweist. Das System enthält erfindungsgemäß ein den Schalthebel (14) in einer dem Schaltbild des Wechselgetriebes entsprechenden Stellung haltendes, mit einem Befestigungsbolzen und Hohlräumen versehenes, kraftschlüssiges befestigendes Elementenpaar (23, 24), wobei das eine Element ortsfest angeordnet ist und das andere mit dem Schalthebel in Zwangsverbindung steht, und das eine Element mit der die Kupplung betätigenden Vorrichtung (6, 8, 20, 21) in einer betätigenden Verbindung steht.

## HYDRAULISCHES FERNSCHALTSYSTEM FÜR MECHANISCHE WECHSELGETRIEBE VON KRAFTFAHRZEUGEN

Die Erfindung betrifft ein hydraulisches Fernschaltsystem, unter Zuhilfenahme dessen die Stufen des mechanischen Wechselgetriebes geschaltet werden können, ohne dass zwischen dem Schalthebel und dem Wechselgetriebe eine mechanische Verbindung besteht (bzw. ein Schaltgestänge vorhanden ist).

Auf bekannte Weise sind diese Fernschaltsysteme so ausgestaltet, dass der Schalthebel zwei aufeinander senkrechte Kolbenstangen in Bewegung setzt, die mit den Kolben von doppelwirkenden hydraulischen Zufuhrzylindern verbunden sind, und das Schaltelement des Wechselgetriebes auf ähnliche Weise mit zwei Kolbenstangen verbunden ist, die wiederum mit den Kolben hydraulischer Arbeitzylinder - deren Anordnung der vorherbeschriebenen entspricht - in Verbindung stehen, und je ein Zufuhrzylinder und ein Arbeitszylinder mit einer Leitung paarweise verbunden sind.

Die Wirkungsweise ist äusserst einfach; der mit dem Schalthebel bewegte Kolben presst Öl aus dem Zufuhrzylinder aus, das Öl strömt in den entsprechenden Arbeitszylinder ein, verschiebt dessen Kolben, wodurch das Schaltelement des Wechselgetriebes in Bewegung gesetzt wird. Solche Lösungen können aus den

0179951

DE-AS 25 10 392 und 29 35 377 erkannt werden. Das letzterwähnte System wird gewissermassen ergänzt, indem das Kupplungpedal den Kolben eines mit Pufferbehälter versehenen Arbeitszylinders bewegt; der Kolben erhöht bei der Lösung der Kupplung den Druck in dem damit verbundenen Fernschaltsystem und ersetzt den Ölverlust.

Die Mangelhaftigkeit dieser hydraulischen Fernschaltsysteme besteht darin, dass sie infolge einer Tem-peraturänderung, Ölsickerung oder unbefriedigender Be-festigung des Schalthebels leicht unzuverlässig werden, da nämlich der Schaltarm sich von seinem geschalteten Zustand leicht verschieben kann, wodurch die Positionen der Zufuhrzylinder und der Arbeitszylinder nicht unbedingt gleich sind.

Der Erfindung wurde das Ziel gesetzt, diese Unzuverlässigkeit zu eliminieren. Das gesetzte Ziel kann dadurch erreicht werden, dass der Schalthebel verriegel-bar ist und die Verriegelung zweckdienlich mit der Lösung und Schliessen der Kupplung synchronisiert erfolgt.

Demnach bezieht sich die Erfindung auf ein hydraulisches Fernschaltsystem für das mechanische Wechsel-getriebe von Kraftfahrzeugen; das System verfügt über hydraulische Zufuhrzylinder und hydraulische Arbeitszylinder und ist so ausgestaltet, dass es ein mit Befestigungsbolzen bzw. Bohrungen versehenes kraftschlüssiges, zur Befestigung dienendes Elementenpaar aufweist, das den Schalthebel in dem Schaltbild des Wechselgetriebes entsprechenden Positionen arretiert, wobei das eine Element ortsfest angeordnet ist und das andere mit dem Schalthebel in Zwangsverbindung steht, wobei das eine Element mit der die Kupplung betätigenden Vorrichtung in einer Betätigungsverbindung steht.

Bei einer vorteilhaften Ausführungsform des erfindungsgemässen hydraulischen Fernschaltsystems ist das Kupplungpedal mit einem hydraulischen Zufuhrzylinder verbunden, der über eine Leitung mit einem verriegelnden Arbeitszylinder verbunden ist, der verriegelnde Arbeitszylinder wiederum mit dem mit dem Kupplungpedal bewegten Glied des befestigenden Elementpaars in einer betätigenden Verbindung steht.

Bei einer weiteren vorteilhaften Ausführungsform des erfindungsgemässen hydraulischen Schaltsystems sind die paarweise, auf an sich bekannte Weise miteinander verbundenen hydraulischen Zufuhrzylinder und hydraulischen Arbeitszylinder über je eine Leitung einem Pufferbehälter angeschlossen und in die erwähnte Leitung sind mit dem Kupplungpedal betätigte Sperrelemente eingesetzt.

Zuletzt, bei einer anderen vorteilhaften Ausführung des erfindungsgemässen hydraulischen Fernschaltsystems werden die Sperrelemente hydraulisch betätigt und der betätigende Zylinderraum mit dem mit dem Kupplungpedal verbundenen hydraulischen Zufuhrzylinder in Verbindung steht.

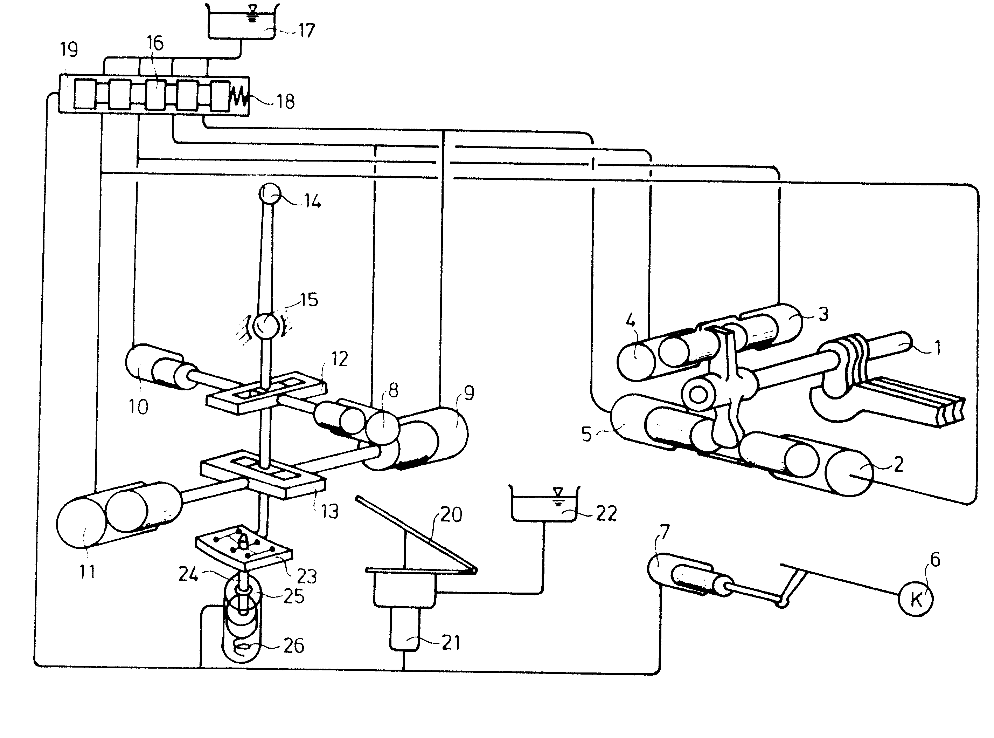

Die Erfindung wird anhand eines vorteilhaften Ausführungsbeispiels mit Hilfe der beiliegenden Zeichnung näher erläutert. Die Zeichnung stellt das hydraulische Fernschaltsystem laut der Erfindung schematisch dar.

Auf die Schaltkonstruktion 1 des mechanischen Wechselgetriebs mit 5 + 1 Stufe ist eine aus hydraulischen Zylindern bestehende Betätigungsvorrichtung montiert. In der Betätigungsvorrichtung ist der Kolben der beiden paarweise angeordneten Arbeitszylinder auf einer gemeinsamen Kolbenstange montiert, wodurch die Verschiebungen identisch sind. Die eine Kolbenstange führt die Auswahl, die andere die Schaltung in die Geschwindigkeitsstufe aus.

Die hydraulischen Arbeitszylinder 2, 3, 4, 5 sind über separate Rohrleitungen mit den zugeordneten hydraulischen Zufuhrzylindern 8, 9, 10 und 11 verbunden. Die Kolben der hydraulischen Zufuhrzylinder 8, 10 bzw. 9 und 11 sind ebenfalls an einer gemeinsamen Kolbenstange angeordnet, wobei in den Kolbenstangen die Kulissen 12 und 13 übereinander ausgestaltet sind. Der Schalthebel 14 des Kraftfahrzeugs ist um ein ortsfestes Gelenk 15 verdrehbar aufgehängt und passt sich der Kulisse 12 und 13 schleifend an.

Die hydraulischen Arbeitszylinder - hydraulischen Zufuhrzylinderpaare 2-11, 3-10, 4-8, 5-9 sind jeweils einzeln über Rohrleitungen mit den Ausflussstutzen eines gegen Federkraft hydraulisch betätigten zweistelligen vierwegigen Verschlusselements 16 verbunden, während die Einflusstutzen des Verschlusselements 16 miteinander und mit einem Pufferbehälter 17 verbunden sind. Das Verschlusselement 16 ist so eingebaut, dass die Feder es in offenem Zustand hält, während es mit dem schliessenden Arbeitszylinder 19 geschlossen werden kann.

Der die Kupplung 16 lösende hydraulische Arbeitszylinder 7 ist mit dem hydraulischen Zufuhrzylinder 21 des Kupplungpedals 20 verbunden, während der Zylinder 21 einerseits mit dem Pufferbehälter 22, anderseits mit dem schliessenden Arbeitszylinder 19 in Verbindung steht.

An dem unteren Ende des Schalthebels 14 befindet sich ein Element 23 mit Bohrungen, an dem in einer dem Schaltbild des Wechselgetriebs entsprechenden Anordnung Bohrungen ausgestaltet sind. In der Auswahl- und Schaltrichtung bewegt sich das Element 23 mit den Bohrungen mit den Kulissen 12, 13. Gegenüber dem mit Bohrungen versehenen Element 23 ist ein Verriegelungszylinder 25 angeordnet, wobei am Ende von dessen Kolbenstange ein Befestigungselement 24 vorgesehen ist. Im Wesen ist das Befestigungselement 24 ein konischer Bolzen, der in die Bohrungen des Elements 23 eingepaßt werden kann.

Der Verriegelungszylinder 25 ist an die den hydraulischen Zufuhrzylinder 21 und den schliessenden Arbeitszylinder 19 miteinander verbindende Leitung angeschlossen.

Der Verriegelungszylinder 25 ist so angeordnet, dass das Befestigungselement 24 mit Hilfe der Feder 26 in dem Element 23 mit den Bohrungen behalten wird, und der Arbeitszylinder 25 das Element 24 anhebt.

Die Wirkungsweise des Systems ist wie folgt: Im Stillstand des Systems sind die aus dem hydraulischen Arbeitszylinder und hydraulischem Zufuhrzylinder bestehenden Paare 2-11, 3-10, 4-8 und 5-9 über das geöffnete Verschlussventil 16 miteinander und dem Pufferbehälter 17 verbunden.

In der geschlossenen Stellung der Kupplung 6 in der Leerstellung oder in einer beliebigen Geschwindigkeitsstufe befindet sich das System im Ruhestand. Mit Hinsicht darauf, dass in dem Wechselgetriebe die Stufen verriegelt sind, können sich die Kolben der hydraulischen Arbeitszylinder 2, 3, 4 und 5 auch nicht verschieben. Gleichzeitig aber hält die Feder 26 das Befestigungselement 24 in der der momentanen Geschwindigkeitsstufe entsprechenden Bohrung des mit Bohrungen versehenen Elements 23, so daß auch der Schalthebel 14 verriegelt ist.

Wenn nun der Fahrer die Geschwindigkeit zu wechseln beabsichtigt, drückt er zunächst das Kupplungpedal 20, das die Hydraulikflüssigkeit aus dem hydraulischen Zufuhrzylinder 21 verdrängt. Die derweise verdrängte Hydraulikflüssigkeit gelangt zu drei Stellen; einerseits zu dem hydraulischen Arbeitszylinder 7, anderseits zu dem schliessenden Arbeitszylinder 19 und

0179951

drittens zu dem Verriegelungsarbeitszylinder 25.

Der hydraulische Arbeitszylinder 7 löst die Kupplung 6, der schliessende Arbeitszylinder 19 schliesst das Ventil 16 , wonach das Verriegelungselement 25 das Befestigungselement 24 aus der Bohrung des Elements 23 heraushebt. Nun kann der Schalthebel 14 frei verschoben werden.

Wenn der Fahrer mit dem Schalthebel 14 wählt und in die gewünschte Stufe schaltet, bewegen sich mit Hilfe der Kulissen 12 und 13 der Bewegungsrichtung entsprechend die Kolben in den hydraulischen Zufuhrzylindern 8, 9, 10 und 11, wodurch die entsprechenden hydraulischen Arbeitszylinder 2, 3, 4 und 5 auch das Schaltelement des Wechselgetriebs umstellen.

Damit ist die Schaltung beendet. Der Zustand wird durch die Verriegelungsvorrichtung des Wechselgetriebs aufrechterhalten.

Durch Loslassen des Kupplungpedals 20 schliesst die Kupplung 6, gleichzeitig schiebt die in dem Verriegelungszylinder vorhandene Feder 26 das Befestigungselement 24 in die der geschalteten Stufe entsprechende Bohrungen des Elements 24 ein. Damit ist auch der Schalthebel 14 verriegelt. Gleichzeitig öffnet die Feder 18 das Verschlusselement 16.

Wie aus dem Gesagten eindeutig hervorgeht, ist das erfindungsgemässe hydraulische Fernschaltsystem - abgesehen von der kurzen Dauer der Schaltung der Geschwindigkeitsstufen - ständig mit dem Pufferbehälter 17 verbunden; das bedeutet, dass das System im Ruhestand entlastet ist. So ist die vollkommene Auffüllung des Systems immer sichergestellt, die Schaltung ist unbedingt betriebssicher. In der Leerstellung und in eingeschalteten Stellungen der einzelnen Geschwindigkeitsstufen schliesst die Verbindung zwischen dem Element 23 mit den Bohrungen und dem Befestigungselement 24 die Verschiebung des Schalthebels 14 aus.

Die Gestaltung und Anordnung des befestigenden Elementenpaars können in verschiedenen Weisen realisiert werden. So z.B. kann das Element mit den Bohrungen ortsfest sein, und das Befestigungselement an dem Schalthebel angeordnet sein.

In diesem Fall kann der verriegelnde Arbeitszylinder das Element mit den Bohrungen betätigen, oder auf dem Schalthebel installiert, auch das Befestigungselement aktivieren.

Patentansprüche

1.) Hydraulisches Fernschaltsystem für mechanische Wechselgetriebe von Kraftfahrzeugen, das hydraulische Zufuhrzylinder (8, 9, 10, 11) und hydraulische Arbeitszylinder (2, 3, 4, 5) aufweist, d a d u r c h g e k e n n z e i c h n e t , dass ein den Schalthebel (14) in einer dem Schaltbild des Wechselgetriebs entsprechenden Stellung haltendes, mit einem Befestigungsbolzen und Hohlräumen versehenes, kraftschlüssiges befestigendes Elementenpaar (23, 24) enthalten ist, wobei das eine Element ortsfest angeordnet ist und das andere mit dem Schalthebel (14) in Zwangsverbindung steht, wobei das eine Element mit der die Kupplung betätigenden Vorrichtung (6, 8, 20, 21) in einer betätigenden Verbindung steht.

2.) Hydraulisches Fernschaltsystem nach Anspruch 1, d a d u r c h g e k e n n z e i c h n e t , dass das Kupplungpedal (20) mit einem hydraulischen Zufuhrzylinder (21) verbunden ist, der über eine Leitung mit dem Verriegelungszylinder (25) verbunden ist, und der genannte Zylinder (25) mit dem durch das Kupplungpedal (20) bewegten Glied des befestigenden Elementenpaars (23, 24) in einer betätigenden Verbindung steht.

3.) Hydraulisches Fernschaltsystem nach Anspruch 1 oder 2, d a d u r c h g e k e n n z e i c h n e t dass die auf bekannte Weise paarweise über Leitungen miteinander verbundenen hydraulischen Zufuhrzylinder und hydraulischen Arbeitszylinder (8-4, 9-5, 10-3, 11-2) mit je einer Leitung einem Pufferbehälter (17) angeschlossen sind und in die Leitungen mit dem Kupplungpedal (20) betätigte Verschlusselemente (16) eingefügt sind.

4.) Hydraulisches Fernschaltsystem nach jedwelchem der Ansprüche 1 bis 3, d a d u r c h  g e - k e n n z e i c h n e t , dass die Verschlusselemente (16) hydraulisch betätigt werden und ihr betätigender Zylinderraum (19) mit dem mit dem Kupplungpedal verbundenen hydraulischen Zufuhrzylinder (21) in Verbindung steht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 235 155 (KLÖCKNER-HUMBOLDT-DEUTZ) * Ansprüche 1, 5-7; Figuren 1-3 * | 1,3 | B 60 K 20/14 B 60 K 41/22 |
| D,A | DE-A-2 935 377 (ZAHNRADFABRIK FRIEDRICHSHAFEN) * Ganzes Dokument * | 1,3 | |
| A | DE-C- 506 223 (ZAHNRADFABRIK FRIEDRICHSHAFEN) * Ganzes Dokument * | 1,2,4 | |
| | | | RECHERCHIERTE SACHGEBIETE (Int. Cl.4) |
| | | | B 60 K 20/00 B 60 K 41/00 |

Der vorliegende Recherchenbericht wurde für alle Patentansprüche erstellt.

| Recherchenort | Abschlußdatum der Recherche | Prüfer |
|---|---|---|
| BERLIN | 14-01-1986 | LEMBLE Y.A.F.M. |